# EUROPÄISCHE PATENTANMELDUNG

(11) **EP 4 699 740 A1**
(43) Veröffentlichungstag der Anmeldung: **25.02.2026**
(21) Anmeldenummer: 25160325.4
(22) Anmeldetag: 26.02.2025
(51) Int. Cl.: B23Q 3/12, B23B 29/04, B23B 29/20, B23B 31/00, B23B 31/113

(54) **SCHNELLSPANNSYSTEM**

(30) Priorität: 23.08.2024 DE 202024104784 U
(71) Anmelder: EWS Weigele GmbH & Co. KG, 73066 Uhingen (DE)
(72) Erfinder: WEIGELE, Matthias, 73066 Uhingen (DE)
(74) Vertreter: Baur & Weber Patentanwälte PartG mbB

(57) **Zusammenfassung**

Es wird eine Schnellspannvorrichtung mit einem Werkzeughalter (1) und einer Halteraufnahme (51) für eine Werkzeugmaschine beschrieben, wobei der Werkzeughalter (1) eine Werkzeugaufnahme (3) für ein Werkzeug und einen Schaft (5) aufweist, wobei an einer vom Außenkonus (9) abgewandten Stirnseite des Schafts (5) ein Stützelement (27) mit einem Federbereich (29) vorgesehen ist, der zusammenpressbar ist.

## Beschreibung

Die Erfindung betrifft eine Schnellspannvorrichtung mit einem Werkzeughalter und einer Halteraufnahme für eine Werkzeugmaschine. Der Werkzeughalter ist in der Halteraufnahme lösbar befestigt oder befestigbar.

In einer Werkzeugmaschine, z. B. zum Drehen oder Bohren, sind Halteraufnahmen vorgesehen, die einen Werkzeughalter mit einem Werkzeug aufnehmen. Die Werkzeugmaschine bewegt das derart an die Werkzeugmaschine gekoppelte Werkzeug bei der Bearbeitung eines Werkstücks und treibt es gegebenenfalls auch an. Eine Halteraufnahme ist insbesondere in einem Werkzeugrevolver der Werkzeugmaschine vorgesehen, der eine Halterung für mehrere Werkzeuge ist.

In der DE 10 2006 008 818 A1 wird eine Vorrichtung, die zum Schnellspannen eines Werkzeughalters in einer Aufnahme eines Werkzeugrevolvers einer Maschine verwendet wird, beschrieben. Der Werkzeughalter besitzt, entlang seiner Zentrumsachse gesehen, einen Aufnahmebereich, um ein Werkzeug aufzunehmen, und einen Schaft. Zwischen Aufnahmebereich und Schaft ist ein gemeinsamer Bund vorgesehen, und letzterer weist schaftseitig eine Präzisions-Planfläche zur Anlage an einer Ausrichtfläche des Revolvers auf. Der Schaft ist in die Aufnahme des Werkzeugrevolvers einsteckbar und in dieser lösbar arretierbar. Hierzu weist der Schaft in seiner Umfangsfläche eine axial und zum Bund hin gerichtete Ausnehmung auf, die in Bundnähe in eine quer gerichtete Hinterschneidung mündet, wobei letztere eine zur Planfläche des Bundes hinzeigende Spannfläche besitzt. Der im Revolver angeordneten Aufnahme ist ein quer zur Einsteckrichtung liegender, bevorzugt radial ausgerichteter, Spannbolzen derart zugeordnet, dass bei eingestecktem Schaft und dem Arbeitsschritt "Spannen" der Spannbolzen an der Spannfläche angreift und die Planfläche präzise an der Ausrichtfläche des Revolvers herangezogen und zugleich arretiert wird, wobei vorzugsweise am Schaft mehrere Ausnehmungen mitsamt zugehöriger Hinterschneidung angeordnet und der Aufnahme im Revolver entsprechend mehrere Spannbolzen zugeordnet sind.

Es stellt sich die Aufgabe eine verbesserte Schnellspannvorrichtung anzugeben.

Die Aufgabe wird durch eine Schnellspannvorrichtung mit einem Werkzeughalter und einer Halteraufnahme für eine Werkzeugmaschine mit den Merkmalen des Anspruchs 1 gelöst.

Der Werkzeughalter ist in der Halteraufnahme lösbar befestigbar oder befestigt. Der Werkzeughalter weist eine Werkzeugaufnahme für ein Werkzeug und einen Schaft auf, zwischen denen ein Außenkonus mit einer schaftseitigen Planauflagefläche angeordnet ist, wobei der Schaft in seiner Umfangfläche zum Außenkonus gerichtete Ausnehmungen aufweist, die jeweils in eine quer gerichtete Hinterschneidung mit einer zum Außenkonus gerichteten Spannfläche münden. Die Halteraufnahme weist einen Innenkonus mit einer Ausrichtfläche, eine Schaftaufnahme und bewegliche Spannbolzen auf.

Bei eingespanntem Werkzeughalter ist der Schaft in die Schaftaufnahme eingesteckt und darin lösbar arretiert, indem die Spannbolzen an den Spannflächen angreifen, sodass der Innenkonus in den Außenkonus greift und sodass die Planauflagefläche an die Ausrichtfläche herangezogen ist und an der Ausrichtfläche anliegt. An einer vom Außenkonus abgewandten Stirnseite des Schafts ist ein Stützelement mit einem Federbereich vorgesehen, der zusammenpressbar ist.

Die Halteraufnahme ist Teil einer Werkzeugmaschine, die beispielsweise eine Dreh- oder Fräsmaschine oder ein Bearbeitungszentrum zum Drehen, Fräsen und Bohren sein kann. Die Halteraufnahme ist insbesondere eine Komponente eines Werkzeugrevolvers solch einer Maschine.

Im Werkzeughalter ist die Werkzeugaufnahme vorgesehen, in die ein Werkzeug, beispielsweise ein Bohrer oder Drehmeißel, eingebaut werden kann. An einer gegenüberliegenden Seite ist ein Schaft vorgesehen, der entlang einer Längsachse des Werkzeughalters verläuft. Der Schaft hat einen Schaftkörper mit zylindrischer, insbesondere kreiszylindrischer Grundform. In dessen Umfangfläche verlaufen die Ausnehmungen, in die die Halteraufnahme bei der Verbindung mit dem Werkzeughalter eingreift. Es sind beispielsweise drei Ausnehmungen vorgesehen, die um 120 Grad versetzt zueinander entlang des Umfangs angeordnet sind. Üblicherweise sind genauso viele Spannbolzen in der Halteraufnahme wie Ausnehmungen am Schaft vorgesehen. Die Ausnehmungen verlaufen in einer Ausführung im Wesentlichen parallel zur Längsachse zum Außenkonus und knicken dann ab, sodass sich ein L-förmiger Verlauf ergibt. Die Spannflächen, an denen die Spannbolzen angreifen, sind in den quer verlaufenden Bereichen und weisen zum Außenkonus.

Zum Spannen wird der Schaft in die Schaftaufnahme geschoben, die den Schaft mit dem Stützelement aufnimmt, und dann werden die Spannbolzen in die quer verlaufenden Bereiche der Ausnehmungen bewegt, sodass die Spannbolzen an den Spannflächen angreifen. In diesem Zustand greift der Außenkonus in den Innenkonus derart, dass die Planauflagefläche an die Ausrichtfläche herangezogen ist und an der Ausrichtfläche anliegt.

Die Öffnung der Schaftaufnahme, in die der Schaft eingesteckt wird, weitet sich zum Innenkonus mit der Ausrichtfläche auf. Im Zentrum der Ausrichtfläche als Boden des Innenkonus ist die Öffnung der Schaftaufnahme.

Sowohl der Außenkonus als auch der Innenkonus haben eine rotationssymmetrische Grundform, deren Durchmesser und Schräge bei Außenkonus und Innenkonus korrespondieren. Es kann Ausführungen geben, bei denen die Form des Außenkonus und/oder des Innenkonus bereichsweise von der rotationssymmetrischen Kegelstumpfform abweicht. Nichtsdestotrotz greift auch bei diesen Ausführungen der Außenkonus in den Innenkonus und wird zentriert.

Der Werkzeughalter ist ein Einsatz, der in die Halteraufnahme geschoben wird. Letztere wird, insbesondere bei statischen Anwendungen auch vereinfachend als "Flansch" bezeichnet. Die Halteraufnahme als weiblicher Teil ist vergleichbar einem Negativ des eingreifenden Bereichs des Werkstückhalters als männlichem Teil gestaltet, um das Ineinandergreifen von Einsatz und Flansch zu ermöglichen. Die Halteraufnahme kann auch als Spindel oder Welle ausgeführt sein, wie sie beispielsweise in einem angetriebenen Werkzeug zu finden ist.

Der Werkzeughalter und die Halteraufnahme sind im Wesentlichen metallen, insbesondere aus gehärteten Stahlkomponenten zusammengesetzt. Nichtsdestotrotz können auch nichtmetallische Komponenten mit spezieller Funktion, beispielsweise Dichtungen, vorgesehen sein.

In einer Ausführung sind die Spannbolzen an einem drehbaren Spannring angeordnet und ragen nach Innen in die Schaftaufnahme. Der Spannring ist zusammen mit den Spannbolzen als einteilige Komponente ausgebildet. Eine Stelleinheit an der Halteraufnahme ist zur Drehung des Spannrings vorgesehen, um die Spannbolzen beim Spannen zu den Spannflächen zu bewegen. Beim Spannen wird der Schaft beim Einschieben durch die in die Ausnehmungen greifenden Spannbolzen in die Schaftaufnahme geführt. Durch eine Drehbewegung des Spannrings und damit der Spannbolzen werden diese in die quer verlaufenden Bereiche der Ausnehmungen bewegt, greifen dadurch an den Spannflächen an und arretieren den Schaft.

Die Formen von Außenkonus und Innenkonus korrespondieren, sodass der Innenkonus formschlüssig in den Außenkonus eingreift. Beim Spannen bewirkt der in den Innenkonus greifende Außenkonus eine Zentrierung des Werkzeughalters, wenn die Planauflagefläche gegen die Ausrichtfläche gespannt ist. Der Außenkonus sorgt für die erforderliche Rundlaufgenauigkeit.

Das Stützelement stirnseitig des Schaftkörpers weist einen elastisch deformierbaren Federbereich auf, an dem es einklemmbar ist. Dies kann erfolgen, indem bei dem eingespannten Werkzeughalter das Stützelement in eine Stützaufnahme am Boden einer Schaftaufnahme eingreift, in die es einfedert. Dadurch wird eine mögliche Überbestimmtheit ausgeglichen, denn die Verbindung ist durch Außenkonus und Innenkonus an der gegenüberliegenden Schaftseite bereits ausreichend bestimmt. Nichtsdestotrotz wird durch längeren Abstand vom Außenkonus zum ebenfalls fixierten Stützelement eine stabile Halterung zur Reduktion von Vibrationen und Verformungen erzielt. Die Form der Stützausnehmung ist derart, dass sie bei eingespanntem Werkzeughalter den in die Stützausnehmung eingreifenden Federbereich zusammenpresst.

Wenn keine Schaftaufnahme in einer Halteraufnahme vorgesehen ist, die geeignet ist, den Federbereich zusammenzudrücken, aber dennoch ausreichend Platz für das Stützelement in der Schaftaufnahme ist, kann der Werkzeughalter in solch eine Halteraufnahme trotzdem eingespannt werden, da mittels der an den Spannflächen angreifenden Spannbolzen nach wie vor das Einspannen des Werkzeughalters ermöglicht wird. Es ist deshalb möglich, den Werkzeughalter in eine konventionelle Halteraufnahme einzuspannen, sofern ausreichend Platz für das Stützelement ist.

In einer Ausführung verjüngt sich das Stützelement in axialer Richtung und kann eine konusförmige Grundform haben, die die Zentrierwirkung und das Eingreifen in die Stützausnehmung unterstützt. Vorteilhafterweise hat das Stützelement eine Aussparung im Zentrum und eine geschlitzte Mantelfläche, sodass federnde Zungen zwischen nutenförmigen Schlitzen der Mantelfläche ausgebildet sind, die den Federbereich bilden und beim Einklemmen in die Stützausnehmung nach Innen gedrückt werden. Passend zur konusförmigen Form mit geschlitzter Mantelfläche weist der Bodenbereich der Schaftaufnahme einen weiteren Innenkegel auf, in den das Stützelement im eingespannten Zustand eingreift.

Bei einem außenkonusförmigen Stützelement weist der in die Halteraufnahme eingreifende Bereich des Werkzeughalters einen Außenkonus vorn und hinten am Schaft auf. Der Außenkonus des Stützelements ist geschlitzt. Dazwischen sind der zylindrische Schaftkörper und die Spanneinheit mit den Ausnehmungen und die darin eingreifenden Spannbolzen. Endseitig der Schaftaufnahme kann eine Falkenbalgdichtung zur Abdichtung vorgesehen sein.

In einer Ausführung ist zwischen dem Schaft und dem Stützelement ein zylindrischer Mitnehmer vorgesehen, dessen Querschnittsfläche eine Polygonform hat. Solch ein Mitnehmer bewirkt eine Kraftübertragung zwischen der Halteraufnahme und dem Werkzeughalter, um das Werkzeug anzutreiben. Außerdem gibt die Polygonform eine Lageorientierung vor. Der Mitnehmer greift im eingespannten Zustand formschlüssig in eine Polygonaufnahme, die ein Bereich der Schaftaufnahme ist. Die Formen von Mitnehmer und Polygonaufnahme korrespondieren, sodass eine Bewegung quer zur Längsachse nicht möglich ist, wenn beide im Eingriff stehen.

In einer Ausführung ragt aus der Planauflagefläche zumindest ein Pin in axiale Richtung, der bei eingespanntem Werkzeughalter in eine Pinaufnahme in der Ausrichtfläche eingreift. Vorteilhafterweise sind zwei Pins an gegenüberliegenden Seiten der Längsachse angeordnet. Der Pin kann eine kreiszylindrische Grundform haben. Die Pins bewirken eine genaue Positionierung des Werkzeughalters und dienen zusätzlich als Drehmomentstütze, da auch sie eine Kraftübertragung ermöglichen. Sie dienen außerdem als Einbausicherung, da eine Orientierung von Werkzeughalter und Halteraufnahme vorgegeben ist und der Werkzeughalter somit nicht falsch eingebaut werden kann. Bei einem Drehmeißel als Werkzeug ist dadurch beispielsweise eine vorgegebene Spitzenhöhe sichergestellt.

In einer Ausführung ist eine randseitige Mitnehmerfläche am Werkzeughalter vorgesehen, die bei eingespanntem Werkzeughalter zu einer Gegenfläche der Halteraufnahme ausgerichtet ist, sodass die Flächen aneinander liegen. Die Mitnehmerfläche ist nicht mit dem zuvor erwähnten Mitnehmer am Schaft zu verwechseln. Sie wirkt als Drehmomentstütze jenseits des Schafts. Eine derartige Mitnehmerfläche kann am Außenkonus vorgesehen sein, sodass dessen Mantel in diesem Bereich von seiner rotationssymmetrischen Grundform abweicht. Allerdings ist sie vorteilhafterweise an einem Flansch vorgesehen, der an der vom Schaft abgewandten Seite des Außenkonus über diesen hinausragt. In einer Ausführung ist der Flansch kreisförmig, und die randseitige Mitnehmerfläche verläuft entlang einer Kreissehne. In einer alternativen Ausführung sind bei einem Flansch mit kreisförmiger Grundform mehrere entlang von Kreissehnen verlaufende Mitnehmerflächen vorgesehen. Bevorzugt sind zwei Mitnehmerflächen vorgesehen, die spiegelsymmetrisch zueinander gegenüberliegend verlaufen. Die Mitnehmerflächen verlaufen parallel oder in spitzem Winkel zur Längsachse. Auch die Mitnehmerfläche dient zur Kraftübertragung und Lageorientierung.

Nachfolgend werden einige Ausführungsbeispiele anhand der Zeichnung näher erläutert. Es zeigen:
- Fig. 1: einen Werkzeughalter als Teil eines Ausführungsbeispiels einer Schnellspannvorrichtung in einer dreidimensionalen Ansicht,
- Fig. 2: den Werkzeughalter aus Fig. 1 in einer Seitenansicht,
- Fig. 3: eine Halteraufnahme als Teil des Ausführungsbeispiels einer Schnellspannvorrichtung in einer Seitenansicht,
- Fig. 4: den Werkzeughalter aus Fig. 1 und Fig. 2, der in die Halteraufnahme aus Fig. 3 eingespannt ist, in einer Seitenansicht,
- Fig. 5: ein Ausführungsbeispiel eines Werkzeughalters in einer Seitenteilansicht im nicht eingespannten Zustand,
- Fig. 6: das Ausführungsbeispiel eines Werkzeughalters in einer Seitenteilansicht im eingespannten Zustand,
- Fig. 7: einen Werkzeughalter als Teil eines weiteren Ausführungsbeispiels einer Schnellspannvorrichtung in einer dreidimensionalen Ansicht,
- Fig. 8: den Werkzeughalter aus Fig. 7 in einer Seitenansicht,
- Fig. 9: eine Halteraufnahme als Teil des weiteren Ausführungsbeispiels einer Schnellspannvorrichtung in einer Seitenansicht,
- Fig. 10: einen Werkzeughalter als Teil noch eines weiteren Ausführungsbeispiels einer Schnellspannvorrichtung in einer dreidimensionalen Ansicht,
- Fig. 11: den Werkzeughalter aus Fig. 10 in einer Seitenansicht, und

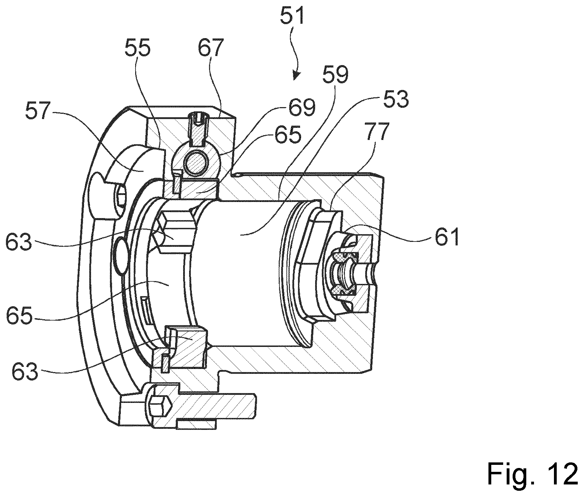

- Fig. 12: eine Halteraufnahme als Teil des noch eines weiteren Ausführungsbeispiels einer Schnellspannvorrichtung in einer dreidimensionalen Ansicht.

In den Figuren sind gleiche oder funktional gleichwirkende Komponenten mit den gleichen Bezugszeichen versehen.

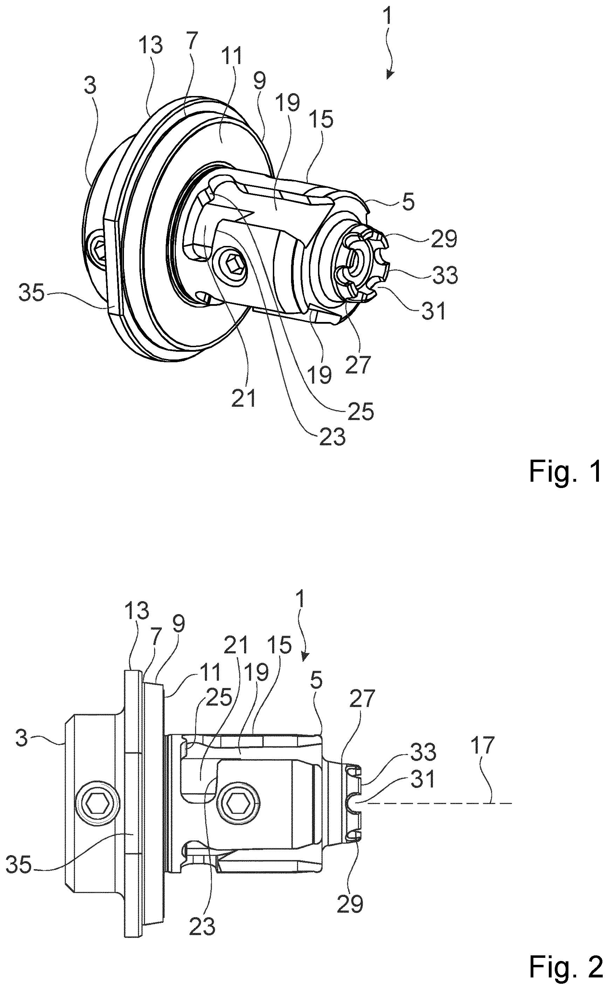

Fig. 1 und Fig. 2 zeigen einen Werkzeughalter als Teil eines Ausführungsbeispiels einer Schnellspannvorrichtung in einer dreidimensionalen Ansicht beziehungsweise in einer Seitenansicht.

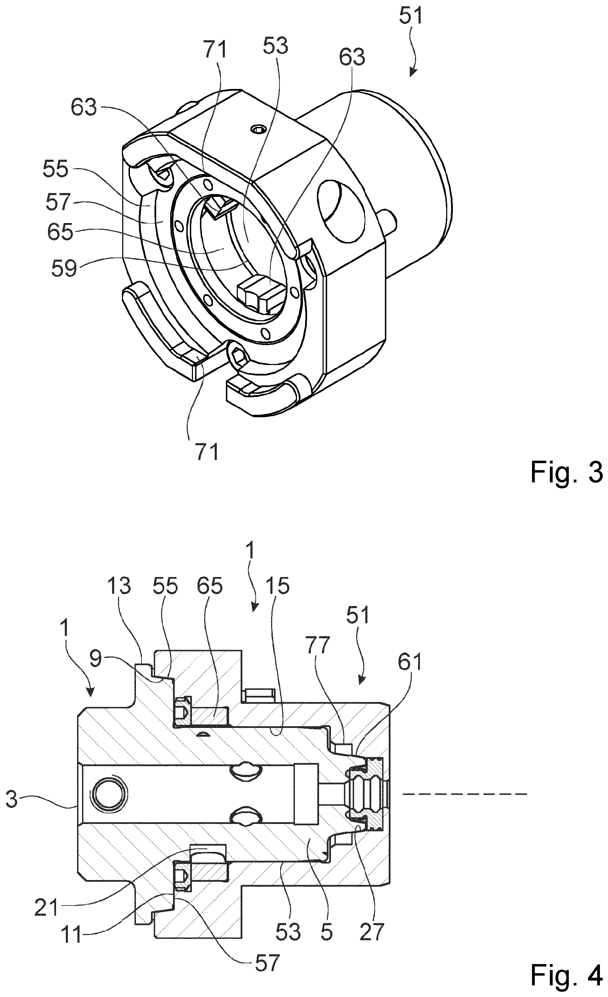

Der Werkzeughalter 1 umfasst entlang einer Längsachse 17 eine Werkzeugaufnahme 3 für ein Werkzeug und einen Schaft 5, der in eine Halteraufnahme 51 der Schnellspannvorrichtung, wie in Fig. 3 dargestellt, einsteckbar ist. Zwischen der Werkzeugaufnahme 3 und dem Schaft 5 ist ein Bund 7, der einen Außenkonus 9 mit einer schaftseitigen Planauflagefläche 11 sowie einen Flansch 13 an der vom Schaft 5 abgewandten Seite des Außenkonus 9 umfasst.

Der Schaft 5 umfasst einen Schaftkörper 15 mit einer kreiszylindrischen Grundform und weist in seiner Umfangfläche zum Außenkonus 9 gerichtete, zunächst in Längsrichtung verlaufende Ausnehmungen 19 am Schaftkörper 15 auf, die jeweils in eine quer gerichtete Hinterschneidung 21 mit einer Spannfläche 23 münden, wobei die Hinterschneidung 21 in der Nähe des Außenkonus 9 ist. Die Spannfläche 23 weist zum Außenkonus 9. Im Bereich der Hinterschneidung 21 ist ein Nocken 25 an der zum Außenkonus 9 gewandten Seite der Hinterschneidung 21. In diesem Ausführungsbeispiel sind drei Ausnehmungen 19 vorgesehen, die in gleicher Weise gestaltet und um 120 Grad versetzt zueinander angeordnet sind.

An einer vom Außenkonus 9 abgewandten Stirnseite des Schaftkörpers 15 ist ein Stützelement 27 mit einem Federbereich 29 angeordnet, der zusammenpressbar ist. Das Stützelement 27 ragt nicht über die Stirnseite des Schaftkörpers 15 hinaus. Das Stützelement 27 und der Schaftkörper 15 können einteilig ausgebildet sein, beispielsweise aus Stahl.

Das Stützelement 27 verjüngt sich in axialer Richtung und hat eine rotationssymmetrische, außenkonusförmige Grundform, deren Mantelfläche geschlitzt ist, sodass federnde Zungen 33 zwischen den Schlitzen 31 der Mantelfläche ausgebildet sind. Der Zungenquerschnitt verjüngt sich in axialer Richtung. Die Schlitze 31 sind an Ihrer zum Schaftkörper 15 weisenden Unterseite gerundet und können eine halbkreisförmige Außenkontur haben. Die Zungen 33 bilden den elastisch deformierbaren Federbereich 29, der zusammenpressbar ist, indem die Zungen 33 nach Innen bewegt werden.

Der Flansch 13 hat eine kreisförmige Grundform. Entlang zweier gegenüberliegender, spiegelsymmetrisch verlaufender Kreissehnen, die den Außenkonus 9 nicht schneiden, sondern allenfalls berühren, verlaufen zwei gerade Mitnehmerflächen 35 parallel zur Längsachse 17. Die Mitnehmerflächen 35 als Abweichungen von einer rotationssymmetrischen Form geben eine Ausrichtung des Werkzeughalters 1 vor.

In die Werkzeugaufnahme 3 an der am Schaft 5 abgewandten Seite des Werkzeughalters 1 ist ein Werkzeug (nicht dargestellt) einsetzbar und darin fixierbar.

Die Halteraufnahme 51 in Fig. 3 bildet mit dem Werkzeughalter 1 die Schnellspannvorrichtung. Die Halteraufnahme 51 weist eine Schaftaufnahme 53 auf, deren Öffnung sich zu einem Innenkonus 55 mit einer Ausrichtfläche 57 aufweitet. Die Ausrichtfläche 57 umgibt einen zylindrischen Bereich 59 für den Schaftkörper 15, dessen Länge mit der Länge des Schaftkörpers 15 korrespondiert. Am Boden des zylindrischen Bereichs 59 ist eine Stützausnehmung 61 vorgesehen, die innenkonusförmig ausgebildet ist, sodass bei eingespanntem Werkzeughalter 1 das Stützelement 27 darin eingeklemmt ist. An der Ausrichtfläche 57 liegt bei eingespanntem Werkzeughalter 1 dessen Planauflagefläche 11 an, und der Außenkonus 9 greift in den Innenkonus 55 ein. Der Schaft 5 ist in die Schaftaufnahme 53 eingesetzt.

Ins Innere der Schaftaufnahme 53 ragen Spannbolzen 63, die derart beweglich sind, dass in einem verdrehten Zustand der Spannbolzen der Werkzeughalter 1 eingespannt ist. Die Spannbolzen 63 sind an einem Spannring 65 angeordnet, der benachbart zur Ausrichtfläche 57 drehbar angeordnet ist, sodass in einem verdrehten Zustand die Spannbolzen 63 um einen Kreisbogenabschnitt versetzt sind. Das Verdrehen erfolgt durch eine Stelleinheit 67 an der Halteraufnahme 51 mittels einer Stellschraube 69, deren Gewinde in einen Zahnradabschnitt am Außenrand des Spannrings 65 eingreift, sodass eine Drehung der Stellschraube 69 eine Rotation des Spannrings 65 bewirkt.

Die Halteraufnahme 51 weist eine Gegenfläche 71 für die Mitnehmerfläche 35 am Werkstückhalter 1 auf. Im eingespannten Zustand liegt die Mitnehmerfläche 35 an der Gegenfläche 71 an, sodass der Werkstückhalter 1 in einer vorgegebenen Position in die Halteraufnahme 51 eingesetzt ist. Die Flächen laufen vorteilhafterweise parallel. Durch Mitnehmerfläche 35 und Gegenfläche 71 ist die Ausrichtung des Werkzeughalters 1 zur Halteraufnahme 51 vorgegeben, da ein Einspannen nur möglich ist, wenn Mitnehmerfläche 35 und Gegenfläche 71 zueinander ausgerichtet sind.

Fig. 4 zeigt einen Schnitt durch den in die Halteraufnahme 51 eingespanntem Werkzeughalter 1.

Zum Einspannen wird der Schaft 5 in die Schaftaufnahme 53 eingesteckt, sodass die Spannbolzen 63 in der Schaftaufnahme 53 in axialer Richtung entlang der Ausnehmungen 19 geführt werden. Das Stützelement 27 wird in die Stützausnehmung 61 und der Außenkonus 9 in den Innenkonus 55 geführt. Die Planauflagefläche 11 wird zur Ausrichtfläche 57 geführt.

Durch Drehen des Spannrings 65 mittels der Stelleinheit 67 erfolgt das Spannen des Werkzeughalters 1 in die Halteraufnahme 51. Die Spannbolzen 63 greifen an den Spannflächen 23 an den Hinterschneidungen 21 an, sodass die Planauflagefläche 11 an die Ausrichtfläche 57 gezogen wird. Das Stützelement 27 greift in die Stützausnehmung 61, sodass der Federbereich 29 in die Stützausnehmung 61 geklemmt und elastisch verformt wird, indem die Zungen 33 nach Innen gedrückt werden.

Der in den Innenkonus 55 greifende Außenkonus 9 zentriert den Werkzeughalter 1 in der Halteraufnahme 51, sodass deren Längsachsen und damit auch die Längsachse des Werkzeugs zueinander ausgerichtet sind. Das Stützelement 27, das in der Stützausnehmung 61 eingeklemmt ist, dient der Steifigkeit. Es versteift das System und verringert Schwingungen, da auch eine stirnseitige Fixierung des Schafts 5 erfolgt. Die Schlitze 31 im Mantel des Stützelements 27 gleichen eine Überbestimmung aus, da das Stützelement 27 einfedert. Durch dieses Einspannen in zwei beabstandete Innenkonusse an beiden Seiten des Schafts 5 ergibt sich eine stabile Abstützung gegen Vibrationen und Verformung.

Beim Lösen des Werkzeughalters 1 schlagen die Spannbolzen jeweils am Nocken 25 an. Dadurch wird die Planauflagefläche 11 von der Ausrichtfläche 57 gelöst und damit der Schaft 5 und somit der Werkzeughalter 1 in axialer Richtung von der Halteraufnahme 51 wegbewegt.

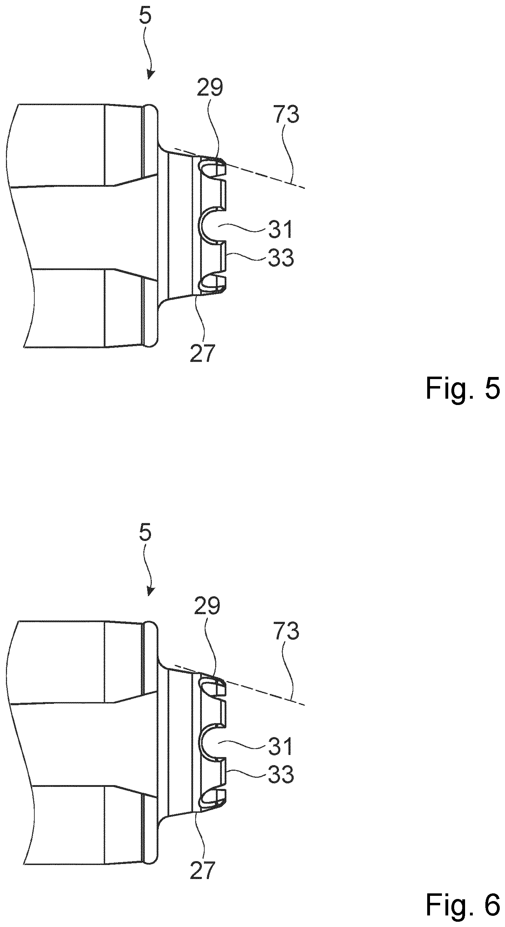

Das Einfedern des Stützelements 27 wird in Fig. 5 und Fig. 6 veranschaulicht, die eine Seitenansicht einen vorderen Bereichs des Schafts 5 mit dem Stützelement 27 zeigen sowie eine Linie 73, die den Verlauf des Innenkonus der Stützausnehmung 61 illustriert.

In Fig. 5 ist erkennbar, dass der Federbereich 29 des Stützelements 27 mit seinen Zungen 33, das im nicht zusammengepressten, entspannten Zustand gezeigt wird, über den Innenkonus radial hinausragt, sodass nur einen Presspassung möglich ist. Fig. 6 veranschaulicht die Deformation der Zungen 33 bei eingespanntem Werkzeughalter, wenn die Zungen 33 vom Innenkonus nach Innen gedrückt werden.

Der beschriebene Werkzeughalter 1 ist auch in Halteraufnahmen 51 einsetzbar, die keinen Konus in der Schaftaufnahme 53 aufweisen, in die das Stützelement 27 klemmbar wäre, sofern die Schaftaufnahme 53 eine ausreichende Länge für den Schaft mit dem Stützelement 27 aufweist. In diesem Fall erfolgt die Fixierung lediglich über den Innenkonus 55 und die verspannten Planauflagefläche 11 und die Ausrichtfläche 57.

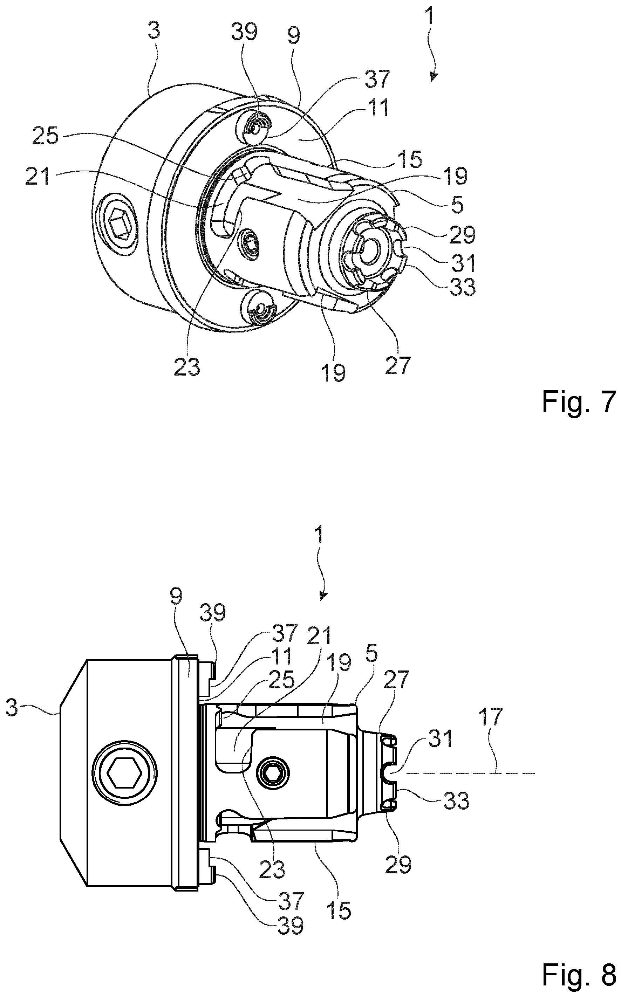

Fig. 7 und Fig. 8 zeigen einen Werkzeughalter 1 als Komponente eines weiteren Ausführungsbeispiels einer Schnellspannvorrichtung in einer dreidimensionalen Ansicht beziehungsweise in einer Seitenansicht.

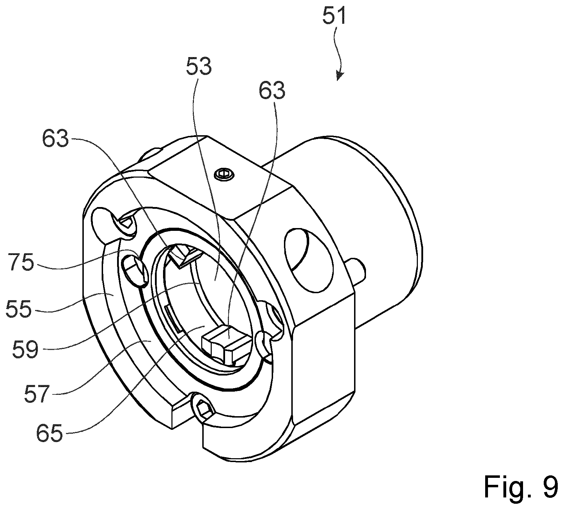

Der Werkzeughalter 1 umfasst entlang einer Längsachse 17 eine Werkzeugaufnahme 3 für ein Werkzeug und einen Schaft 5, der in eine Halteraufnahme 51 der Schnellspannvorrichtung, wie in Fig. 9 dargestellt, einsteckbar ist. Um Wiederholungen zu vermeiden, konzentriert sich die Beschreibung auf Unterschiede zum vorherigen Ausführungsbeispiel.

In diesem Ausführungsbeispiel sind statt einer Mitnehmerfläche zwei Pins 37 in der Planauflagefläche 11 vorgesehen. Sie sind an gegenüberliegenden Seiten der Längsachse 17 angeordnet und ragen in axiale Richtung. Die Pins 37 haben eine kreiszylindrische Grundform mit erhöhten Krägen 39, die als erhabene Halbkreisringe ausgebildet sind und an der von der Längsachse 17 wegweisenden Seite der Pins 37 angeordnet sind. Im Bereich radial der Pins 37 weist der Außenkonus 9 entlang eines Bogenabschnitts eine andere Steigung auf, sodass er steiler ist als im übrigen Bereich. Dieser Bereich kann sogar parallel zur Längsachse 17 verlaufen. Der Bereich kann zu einem korrespondierenden Bereich im Innenkonus 55 der Halteraufnahme 51, sofern vorhanden, ausgerichtet sein.

In der Ausrichtfläche 57 der Halteraufnahme 51 sind zwei Pinaufnahmen 75 vorgesehen, deren Größe derart mit den Pins 39 korrespondiert, sodass die Pins 39 bei aufeinanderliegenden Flächen in die Pinaufnahmen 75, vorteilhafterweise formschlüssig eingreifen. Das Eingreifen wird durch den Kragen 39 am Pin 37 erleichtert. Die Pins 37 dienen im eingespannten Zustand der Kraftübertragung und Lageorientierung, sodass der Werkzeughalter 1 und die Halteraufnahme 51 in vorgegebener Weise zueinander ausgerichtet sind.

Sowohl die Pins 37 als auch die zuvor beschriebene Mitnehmerfläche 35 sind optional. Sind sie nicht vorgesehen, hat der Außenkonus 9 mit der Planauflagefläche 11 lediglich eine Stützwirkung, ohne eine Orientierung vorzugeben. Die Orientierung erfolgt durch die Spanneinheit mit den Ausnehmungen 19 und den Spannbolzen 63. Bei äquidistant angeordneten Ausnehmungen 19 bestehen jedoch noch Freiheitsgrade. So sind bei drei Ausnehmungen 19 auch drei verschiedene, jeweils um 120 Grad versetzte Positionen möglich, in der der Werkzeughalter 1 zur Halteraufnahme 51 ausgerichtet sein kann. Jedoch wird eine der drei vorgenannten Optionen benötigt, damit die Schnellspannvorrichtung funktioniert. Ein als Anschlag wirkendes Mittel, um die Position des Werkzeughalters relativ zur Halteraufnahme festzulegen, ist erforderlich, da sich sonst der Werkzeughalter relativ zur Halteraufnahme frei drehen würde.

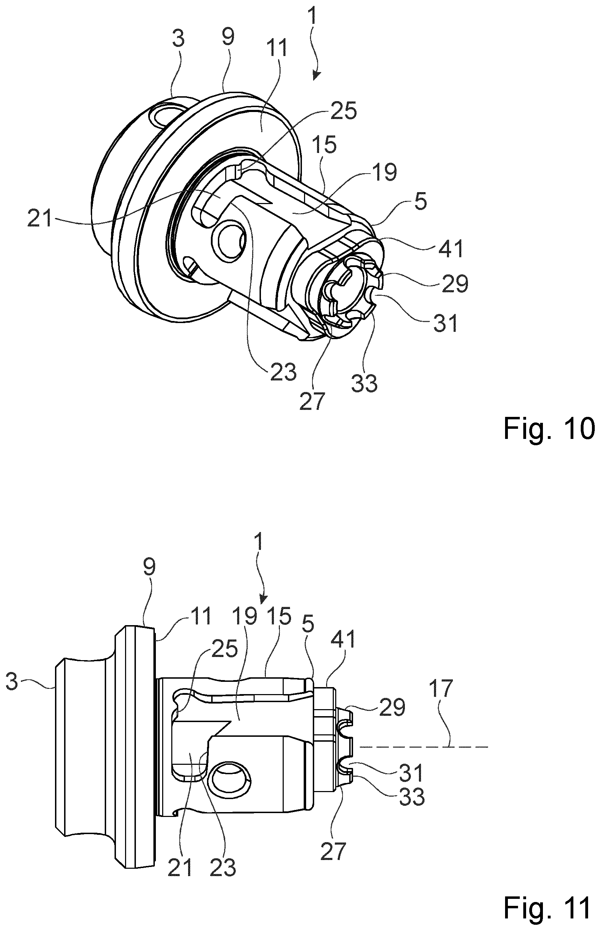

Fig. 10 und Fig. 11 zeigen einen Werkzeughalter 1 als Komponente noch eines weiteren Ausführungsbeispiels einer Schnellspannvorrichtung in einer dreidimensionalen Ansicht beziehungsweise in einer Seitenansicht. Um Wiederholungen zu vermeiden, konzentriert sich die Beschreibung auf Unterschiede zu den vorherigen Ausführungsbeispielen.

In diesem Ausführungsbeispiel ist zwischen dem Schaftkörper 15 und dem Stützelement 27 ein Mitnehmer 41 vorgesehen. Er hat eine zylindrische Form mit polygonenförmigem Querschnitt. Der Mitnehmer 41 dient der verbesserten Kraftübertragung und der Lageorientierung, da der polygonenförmige Querschnitt nur eine oder eine begrenzte Zahl von Positionen vorgibt, in denen der eingespannte Werkzeughalter 1 zur Halteraufnahme 51 ausgerichtet sein kann. Der Schaft 5 mit Schaftkörper 15, Mitnehmer 41 und Stützelement 27 kann einstückig ausgebildet sein.

Der Schaft 5 ist bei diesem Ausführungsbeispiel nicht länger als bei den vorangegangenen Ausführungsbeispielen. Gleiches gilt für den Schaftkörper 15. Allerdings ist das Stützelement 27 kürzer, da ein Sockelbereich der anderen Ausführungsbeispiele, dessen Mantel nicht geschlitzt ist und in die Zungen 33 mündet, in diesem Ausführungsbeispiel als Mitnehmer 41 mit Polygonenform ausgebildet ist.

Auf Grund des Mitnehmers 27, der die Orientierung, insbesondere in Kombination mit der Anordnung der Ausnehmungen 19, vorgibt, sind weder Pins 37 noch eine Mitnehmerfläche 35 vorgesehen. Nichtsdestotrotz sind aber auch Ausführungsbeispiele mit diesen zusätzlichen Merkmalen möglich.

Fig. 13 zeigt die Halteraufnahme 51 für die Schnellspannvorrichtung in einer dreidimensionalen Schnittansicht. Die Halteraufnahme 51 umfasst eine Schaftaufnahme 53 und einen Innenkonus 55 mit Ausrichtfläche 57. **In** der Schaftaufnahme 53 ist ein Bereich zwischen dem zylindrischem Bereich 59 und der Stützausnehmung 61 als Polygonaufnahme 77 vorgesehen, in die der Mitnehmer 41 bei eingespanntem Werkzeughalter 1 formschlüssig eingreift. Der Boden der Schaftaufnahme 53 bildet die Stützausnehmung 61 mit einem innenkonusförmigen Bereich aus, in die das Stützelement 27 geklemmt wird.

Ausführungsbeispiele ohne Mitnehmer 41, wie in Zusammenhang mit den Fig. 1 bis Fig 9 beschrieben, werden für statische Anwendungen bevorzugt. Das Vorsehen eines Mitnehmers 41 ist insbesondere für rotierende, angetriebene Anwendungen oder Anwendungen im hochbelasteten Bereich vorgesehen.

Trotz Polygonaufnahme 77 sind auch Schäfte 5 ohne Mitnehmer 41, wie in den vorangegangenen Ausführungsbeispielen beschrieben, in solch eine Schaftaufnahme 53 einsetzbar. In diesem Fall läuft der Sockelbereich des Stützelements 27 durch die Polygonaufnahme 77 und der Federbereich 29 wird durch die innenkonusförmige Stützausnehmung 61 zusammengepresst, wie es in Fig. 4 gezeigt ist.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Bezugszeichen

- 1: Werkzeughalter
- 3: Werkzeugaufnahme
- 5: Schaft
- 7: Bund
- 9: Außenkonus
- 11: Planauflagefläche
- 13: Flansch
- 15: Schaftkörper
- 17: Längsachse
- 19: Ausnehmung
- 21: Hinterschneidung
- 23: Spannfläche
- 25: Nocke
- 27: Stützelement
- 29: Federbereich
- 31: Schlitz
- 33: Zunge
- 35: Mitnehmerfläche
- 37: Pin
- 39: Kragen
- 41: Mitnehmer
- 51: Halteraufnahme
- 53: Schaftaufnahme
- 55: Innenkonus
- 57: Ausrichtfläche
- 59: zylindrischer Bereich
- 61: Stützausnehmung
- 63: Spannbolzen
- 65: Spannring
- 67: Stelleinheit
- 69: Stellschraube
- 71: Gegenfläche
- 73: Linie
- 75: Pinaufnahme
- 77: Polygonaufnahme

## Patentansprüche

1. Schnellspannvorrichtung mit einem Werkzeughalter (1) und einer Halteraufnahme (51) für eine Werkzeugmaschine, wobei der Werkzeughalter (1) in der Halteraufnahme (51) lösbar befestigbar ist oder befestigt ist,
wobei der Werkzeughalter (1) eine Werkzeugaufnahme (3) für ein Werkzeug und einen Schaft (5) aufweist, zwischen denen ein Außenkonus (9) mit einer schaftseitigen Planauflagefläche (11) angeordnet ist, wobei der Schaft (5) in seiner Umfangfläche zum Außenkonus (9) gerichtete Ausnehmungen (19) aufweist, die jeweils in eine quer gerichtete Hinterschneidung (21) mit einer zum Außenkonus (9) gerichteten Spannfläche (23) münden,
wobei die Halteraufnahme (51) einen Innenkonus (55) mit einer Ausrichtfläche (57), eine Schaftaufnahme (53) und bewegliche Spannbolzen (63) aufweist,
wobei bei eingespanntem Werkzeughalter (1) der Schaft (5) in die Schaftaufnahme (53) eingesteckt und darin lösbar arretiert ist, indem die Spannbolzen (63) an den Spannflächen (23) angreifen, sodass der Innenkonus (55) in den Außenkonus (9) greift und sodass die Planauflagefläche (11) an die Ausrichtfläche (57) herangezogen ist und an der Ausrichtfläche (57) anliegt,
**dadurch gekennzeichnet, dass** an einer vom Außenkonus (9) abgewandten Stirnseite des Schafts (5) ein Stützelement (27) mit einem Federbereich (29) vorgesehen ist, der zusammenpressbar ist.

2. Schnellspannvorrichtung nach Anspruch 1,
wobei die Schaftaufnahme (53) eine Stützausnehmung (61) aufweist, die ausgebildet ist, dass sie bei eingespanntem Werkzeughalter (1) den in die Stützausnehmung (61) eingreifenden Federbereich (29) zusammenpresst.

3. Schnellspannvorrichtung nach Anspruch 1 oder 2
wobei das Stützelement (27) sich in axialer, vom Außenkonus (9) wegweisender Richtung verjüngt.

4. Schnellspannvorrichtung nach einem der vorherigen Ansprüche,
wobei das Stützelement (27) eine Aussparung in seinem Zentrum und eine geschlitzte Mantelfläche aufweist, sodass federnde Zungen (33) zwischen Schlitzen (31) der Mantelfläche ausgebildet sind.

5. Schnellspannvorrichtung nach einem der vorherigen Ansprüche,
wobei das Stützelement (27) eine außenkonusförmige Grundform hat, deren Mantelfläche geschlitzt ist.

6. Schnellspannvorrichtung nach einem der vorherigen Ansprüche,
wobei ein Bodenbereich der Schaftaufnahme (53) einen weiteren Innenkegel aufweist.

7. Schnellspannvorrichtung nach einem der vorherigen Ansprüche,
wobei zwischen einem Schaftkörper (15) des Schafts (5) mit den Ausnehmungen (19) und dem Stützelement (27) ein Mitnehmer (41) vorgesehen ist, der eine Polygonform hat.

8. Schnellspannvorrichtung nach Anspruch 7,
wobei die Schaftaufnahme (53) eine Polygonaufnahme (77) umfasst, in die der Mitnehmer (41) bei eingespanntem Werkzeughalter (1) formschlüssig eingreift.

9. Schnellspannvorrichtung nach einem der vorherigen Ansprüche,
wobei aus der Planauflagefläche (11) ein Pin (37) ragt, der bei eingespanntem Werkzeughalter (1) in eine Pinaufnahme (39) in der Ausrichtfläche (57) eingreift.

10. Schnellspannvorrichtung nach einem der vorherigen Ansprüche,
wobei eine randseitige Mitnehmerfläche (35) am Werkzeughalter (1) vorgesehen ist, die bei eingespanntem Werkzeughalter (1) zu einer Gegenfläche (71) der Halteraufnahme (51) ausgerichtet ist.

11. Schnellspannvorrichtung nach Anspruch 10,
wobei die Mitnehmerfläche (35) an einem Flansch (13) angeordnet ist, der an einer vom Schaft (5) abgewandten Seite des Außenkonus (9) angeordnet ist.

12. Schnellspannvorrichtung nach Anspruch 11,
wobei der Flansch (13) eine kreisförmige Grundform hat und die randseitige Mitnehmerfläche (35) entlang einer Kreissehne verläuft.

13. Schnellspannvorrichtung nach einem der Ansprüche 10 bis 12.
wobei die Mitnehmerfläche (35) parallel oder in spitzem Winkel zu einer Längsachse (15) des Werkzeughalters (1), entlang der sich der Schaft (5) erstreckt, verläuft.

14. Schnellspannvorrichtung nach einem der vorherigen Ansprüche,
wobei die Spannbolzen (63) an einem drehbaren Spannring (65) angeordnet sind und nach Innen in die Schaftaufnahme (53) ragen und wobei eine Stelleinheit (67) an der Halteraufnahme (51) zur Bewegung des Spannrings (65) vorgesehen ist.

## Geänderte Patentansprüche

### Geänderte Patentansprüche gemäss Regel 137(2) EPÜ.

1. Schnellspannvorrichtung mit einem Werkzeughalter (1) und einer Halteraufnahme (51) für eine Werkzeugmaschine, wobei der Werkzeughalter (1) in der Halteraufnahme (51) lösbar befestigbar ist oder befestigt ist,
wobei der Werkzeughalter (1) eine Werkzeugaufnahme (3) für ein Werkzeug und einen Schaft (5) aufweist, zwischen denen ein Außenkonus (9) mit einer schaftseitigen Planauflagefläche (11) angeordnet ist, wobei der Schaft (5) einen Schaftkörper (15) mit einer vom Außenkonus (9) abgewandten Stirnseite aufweist und der Schaft (5) in seiner Umfangfläche zum Außenkonus (9) gerichtete Ausnehmungen (19) aufweist, die jeweils in eine quer gerichtete Hinterschneidung (21) mit einer zum Außenkonus (9) gerichteten Spannfläche (23) münden,
wobei die Halteraufnahme (51) einen Innenkonus (55) mit einer Ausrichtfläche (57), eine Schaftaufnahme (53) und bewegliche Spannbolzen (63) aufweist,
wobei bei eingespanntem Werkzeughalter (1) der Schaft (5) in die Schaftaufnahme (53) eingesteckt und darin lösbar arretiert ist, indem die Spannbolzen (63) an den Spannflächen (23) angreifen, sodass der Innenkonus (55) in den Außenkonus (9) greift und sodass die Planauflagefläche (11) an die Ausrichtfläche (57) herangezogen ist und an der Ausrichtfläche (57) anliegt,
**dadurch gekennzeichnet, dass** der Schaft (5) stirnseitig des Schaftkörpers (15) ein Stützelement (27) mit einem Federbereich (29), der zusammenpressbar ist, umfasst.

2. Schnellspannvorrichtung nach Anspruch 1,
wobei die Schaftaufnahme (53) eine Stützausnehmung (61) aufweist, die ausgebildet ist, dass sie bei eingespanntem Werkzeughalter (1) den in die Stützausnehmung (61) eingreifenden Federbereich (29) zusammenpresst.

3. Schnellspannvorrichtung nach Anspruch 1 oder 2
wobei das Stützelement (27) sich in axialer, vom Außenkonus (9) wegweisender Richtung verjüngt.

4. Schnellspannvorrichtung nach einem der vorherigen Ansprüche,
wobei das Stützelement (27) eine Aussparung in seinem Zentrum und eine geschlitzte Mantelfläche aufweist, sodass federnde Zungen (33) zwischen Schlitzen (31) der Mantelfläche ausgebildet sind.

5. Schnellspannvorrichtung nach einem der vorherigen Ansprüche,
wobei das Stützelement (27) eine außenkonusförmige Grundform hat, deren Mantelfläche geschlitzt ist.

6. Schnellspannvorrichtung nach einem der vorherigen Ansprüche,
wobei ein Bodenbereich der Schaftaufnahme (53) einen weiteren Innenkegel aufweist.

7. Schnellspannvorrichtung nach einem der vorherigen Ansprüche,
wobei zwischen dem Schaftkörper (15) des Schafts (5) mit den Ausnehmungen (19) und dem Stützelement (27) ein Mitnehmer (41) vorgesehen ist, der eine Polygonform hat.

8. Schnellspannvorrichtung nach Anspruch 7,
wobei die Schaftaufnahme (53) eine Polygonaufnahme (77) umfasst, in die der Mitnehmer (41) bei eingespanntem Werkzeughalter (1) formschlüssig eingreift.

9. Schnellspannvorrichtung nach einem der vorherigen Ansprüche,
wobei aus der Planauflagefläche (11) ein Pin (37) ragt, der bei eingespanntem Werkzeughalter (1) in eine Pinaufnahme (39) in der Ausrichtfläche (57) eingreift.

10. Schnellspannvorrichtung nach einem der vorherigen Ansprüche,
wobei eine randseitige Mitnehmerfläche (35) am Werkzeughalter (1) vorgesehen ist, die bei eingespanntem Werkzeughalter (1) zu einer Gegenfläche (71) der Halteraufnahme (51) ausgerichtet ist.

11. Schnellspannvorrichtung nach Anspruch 10,
wobei die Mitnehmerfläche (35) an einem Flansch (13) angeordnet ist, der an einer vom Schaft (5) abgewandten Seite des Außenkonus (9) angeordnet ist.

12. Schnellspannvorrichtung nach Anspruch 11,
wobei der Flansch (13) eine kreisförmige Grundform hat und die randseitige Mitnehmerfläche (35) entlang einer Kreissehne verläuft.

13. Schnellspannvorrichtung nach einem der Ansprüche 10 bis 12.
wobei die Mitnehmerfläche (35) parallel oder in spitzem Winkel zu einer Längsachse (15) des Werkzeughalters (1), entlang der sich der Schaft (5) erstreckt, verläuft.

14. Schnellspannvorrichtung nach einem der vorherigen Ansprüche,
wobei die Spannbolzen (63) an einem drehbaren Spannring (65) angeordnet sind und nach Innen in die Schaftaufnahme (53) ragen und wobei eine Stelleinheit (67) an der Halteraufnahme (51) zur Bewegung des Spannrings (65) vorgesehen ist.
